# EUROPEAN PATENT APPLICATION

(11) **EP 4 764 640 A1**
(43) Date of publication of application: **24.06.2026**
(21) Application number: 24905575.7
(22) Date of filing: 12.08.2024
(51) Int. Cl.: G02B 6/44

(54) **HOLLOW-CORE MICROSTRUCTURED OPTICAL FIBER RIBBON AND PREPARATION METHOD THEREFOR**

(30) Priority: 22.12.2023 CN 202311777991
(71) Applicant: Yangtze Optical Fibre and Cable Joint Stock Limited Company, Wuhan, Hubei 430074 (CN)
(72) Inventor: RUAN, Yunfang, Wuhan, Hubei 430074 (CN); CHEN, Changcheng, Wuhan, Hubei 430074 (CN); HU, Haifeng, Wuhan, Hubei 430074 (CN); TANG, Siyi, Wuhan, Hubei 430074 (CN); DUAN, Wentao, Wuhan, Hubei 430074 (CN); JIANG, Wei, Wuhan, Hubei 430074 (CN); LI, Mengru, Wuhan, Hubei 430074 (CN); ZHAN, Hao, Wuhan, Hubei 430074 (CN); XIAO, Yi, Wuhan, Hubei 430074 (CN); XIONG, Zhuang, Wuhan, Hubei 430074 (CN); QI, Lin, Wuhan, Hubei 430074 (CN)
(74) Representative: Lorenz Seidler Gossel Part. mbB
(86) International application number: PCT/CN2024/111476
(87) International publication number: WO 2025/130080

(57) **Abstract**

Disclosed is a hollow-core microstructured fiber ribbon and a preparation method thereof. The hollow-core microstructured fiber ribbon includes a plurality of hollow-core microstructured fibers arranged side by side. The plurality of hollow-core microstructured fibers have identical end-face structures and are coated with a ribbon-forming resin for fixing positions of the hollow-core microstructured fibers. A plurality of anti-resonant microstructured elements are distributed on an inner side of a glass capillary tube, an outermost coating are coated on the glass capillary tube, and the outermost coating has at least one pair of parallel positioning surfaces. Positioning surfaces of adjacent hollow-core microstructured fibers are aligned and spliced with each other, such that the plurality of hollow-core microstructured fibers arranged side by side are fixed in the ribbon-forming resin in a same orientation. In the hollow-core microstructured fiber ribbon provided by the disclosure, the hollow-core microstructured fibers are oriented by means of non-circular fiber coatings and are arranged side by side by means of parallel positioning surfaces, ensuring consistent orientations of the end-faces of all the hollow-core microstructured fibers in the fiber ribbon, thereby improving splicing efficiency and reducing splicing losses.

## Description

### TECHNICAL FIELD

The present disclosure belongs to the field of optical communication, and more particularly relates to a hollow-core microstructured fiber ribbon and a preparation method thereof.

### BACKGROUND

Hollow-core microstructured fibers feature ultra-low transmission losses, low dispersion, low non-linearity, and a propagation speed close to the speed of light. With the in-depth research on hollow-core fibers based on the principle of anti-resonance, the hollow-core microstructured fibers with a reasonable structural design can effectively reduce transmission loss, possessing the potential for use as ultra-long distance communication fibers and the prospects for large-scale applications. Such fibers are widely recognized for use in next-generation ultra-high-capacity, low-latency, high-speed optical communication systems.

A typical subscriber access network is generally composed of three types of cables, including feeder cables, distribution cables, and drop cables. Among the three types of optical cables, the feeder cable has the largest number of fiber cores, followed by the distribution cable, and the drop cable has the fewest fiber cores. With the rapid growth of current data transmission demands, optical cables are developing towards large core counts and high core densities. Moreover, to further reduce splicing costs and improve splicing efficiency, a preferred structure is generally a fiber ribbon optical cable, which allows multiple fibers to be spliced simultaneously. In conventional fibers, since both cores and claddings have circular cross-sections, when forming a fiber ribbon, it is only necessary to ensure the alignment of fiber cores during splicing, and the splicing loss can be maintained at a relatively-low level. However, hollow-core microstructured fibers currently exhibit rotational symmetry, but they do not possess perfect circular symmetry. Therefore, they cannot be rotated arbitrarily relative to each other; otherwise, anti-resonant rings and core regions cannot be properly aligned, resulting in a high splicing loss.

### SUMMARY

In view of the above defects or improvement requirements in the prior art, the present disclosure provides a hollow-core microstructured fiber ribbon and a preparation method thereof, with the objectives of maintaining consistent orientations of fibers arranged side by side in the fiber ribbon by splicing hollow-core microstructured fibers having parallel positioning surfaces, allowing anti-resonant microstructures of each fiber in the fiber ribbon to be matched during ribbon splicing, thereby achieving precise end-face alignment and solving the technical problems that it is difficult to match end-faces of fibers in a hollow-core microstructured fiber ribbon individually and that the splicing loss of the hollow-core microstructured fiber ribbon is relatively high.

To achieve the above objectives, according to one aspect of the disclosure, a hollow-core microstructured fiber ribbon is provided, which includes a plurality of hollow-core microstructured fibers arranged side by side. The plurality of hollow-core microstructured fibers have identical end-face structures and are coated with a ribbon-forming resin for fixing positions of the hollow-core microstructured fibers.

Each of the hollow-core microstructured fibers includes a glass capillary tube, a plurality of anti-resonant microstructured elements, and an outermost coating. An outer contour of a cross-section of the glass capillary tube is circular, the plurality of anti-resonant microstructured elements are distributed on an inner side of the glass capillary tube, and the outermost coating is applied to the glass capillary tube.

The outermost coating has at least one pair of parallel positioning surfaces, such that an outer contour of a cross-section of the hollow-core microstructured fiber is non-circular, and each positioning surface maintains a consistent positional relationship with the plurality of anti-resonant microstructured elements in a longitudinal direction.

Positioning surfaces of adjacent hollow-core microstructured fibers are aligned and spliced with each other, such that the plurality of hollow-core microstructured fibers arranged side by side are fixed in the ribbon-forming resin in a same orientation.

Preferably, in the hollow-core microstructured fiber ribbon, each positioning surface is linear in a cross-section of the hollow-core microstructured fiber.

Preferably, in the hollow-core microstructured fiber ribbon, contours of the outermost coating on two sides of each positioning surface are asymmetric.

Preferably, in the hollow-core microstructured fiber ribbon, an outer contour of a cross-section of the fiber coating for preparing the fiber ribbon is racetrack-shaped, octagonal-shaped, or square-bracket-shaped.

Preferably, in the hollow-core microstructured fiber ribbon, the capillary tube or an inner side of the capillary tube of the hollow-core microstructured fiber has a marking, such that an end-face of the hollow-core microstructured fiber is asymmetric.

Preferably, in the hollow-core microstructured fiber ribbon, the markings of the plurality of hollow-core microstructured fibers arranged side by side are located in a same orientation relative to an arrangement direction of the fiber ribbon.

Preferably, in the hollow-core microstructured fiber ribbon, one or more coatings are disposed between the glass capillary tube and the outermost coating, and each of the one or more coatings has a color marking.

According to another aspect of the disclosure, a method for preparing the hollow-core microstructured fiber ribbon as described above is provided, which includes steps of:
arranging the plurality of hollow-core microstructured fibers side by side, such that positioning surfaces of the adjacent hollow-core microstructured fibers are aligned and spliced with each other; and
coating and curing a photocurable resin on outer sides of the plurality of hollow-core microstructured fibers arranged side by side to form the ribbon-forming resin, such that positions of the plurality of hollow-core microstructured fibers are fixed.

Preferably, in the method for preparing the hollow-core microstructured fiber ribbon, markings of the plurality of hollow-core microstructured fibers arranged side by side are located in the same orientation relative to the arrangement direction of the fiber ribbon.

Preferably, in the method for preparing the hollow-core microstructured fiber ribbon, coatings of the hollow-core microstructured fibers have color markings, and the plurality of hollow-core microstructured fibers are arranged side by side according to a preset sequence of the color markings.

In general, compared with the prior art, the above technical solutions conceived by the disclosure can achieve several beneficial effects as described in detail below.

In the hollow-core microstructured fiber ribbon provided by the disclosure, the hollow-core microstructured fibers are oriented by means of non-circular fiber coatings and are arranged side by side by means of parallel positioning surfaces, thereby ensuring consistent orientations of the end-faces of all the hollow-core microstructured fibers in the fiber ribbon. This can facilitate one-by-one matching of the anti-resonant microstructures of the fibers during ribbon splicing, thereby improving splicing efficiency and reducing splicing losses.

In preferred embodiments, by means of markings provided on the plurality of hollow-core microstructured fibers, the geometric relationship between the markings and the positioning surfaces of the fiber coatings is maintained consistently along the longitudinal direction, and the markings are located in a same orientation relative to the arrangement direction of the fiber ribbon. Accordingly, consistent orientations of the hollow-core microstructured fibers in the fiber ribbon can also be ensured even for fibers having rotationally symmetric coatings, such as those having octagonal coatings.

### BRIEF DESCRIPTION OF THE DRAWINGS

Fig. 1 is a schematic structural diagram of a hollow-core microstructured fiber ribbon with additive-assisted positioning on inner walls of claddings and racetrack-shaped outer contours, provided by the disclosure;
Fig. 2 is a schematic structural diagram of a hollow-core microstructured fiber with additive-assisted positioning on an inner wall of a cladding and a racetrack-shaped outer contour, provided by the disclosure;
Fig. 3 is a schematic structural diagram of a hollow-core microstructured fiber ribbon with additive-assisted positioning on inner walls of claddings and octagonal outer contours, provided by the disclosure;
Fig. 4 is a schematic structural diagram of a hollow-core microstructured fiber with additive-assisted positioning on an inner wall of a cladding and an octagonal outer contour, provided by the disclosure;
Fig. 5 is a schematic structural diagram of a hollow-core microstructured fiber ribbon with additive-assisted positioning on inner walls of claddings and square-bracket-shaped outer contours, provided by the disclosure; and
Fig. 6 is a schematic structural diagram of a hollow-core microstructured fiber with additive-assisted positioning on an inner wall of a cladding and a square-bracket-shaped outer contour, provided by the disclosure.

In the accompanying drawings, similar reference numerals denote identical or similar elements or structures.

### LIST OF REFERENCE NUMERALS

1 capillary tube (cladding)
2 first anti-resonant cladding ring (of an anti-resonant microstructured element)
3 second anti-resonant cladding ring (of the anti-resonant microstructured element)
4 marking
5 coating
6 positioning surface
7 core region
8 ribbon-forming resin

### DETAILED DESCRIPTION OF THE EMBODIMENTS

The technical problems to be solved, technical solutions, and advantages of the disclosure will become apparent from the following detailed description with reference to the embodiments. It should be understood that the specific embodiments described herein are intended only to explain the disclosure, rather than to limit the disclosure. In addition, the technical features involved in various implementations of the disclosure described below may be combined with each other as long as they do not constitute a conflict with each other.

A hollow-core microstructured fiber ribbon provided by the disclosure includes a plurality of hollow-core microstructured fibers arranged side by side. The plurality of hollow-core microstructured fibers have identical end-face structures and are coated with a ribbon-forming resin for fixing positions of the hollow-core microstructured fibers.

Each of the hollow-core microstructured fibers includes a glass capillary tube, a plurality of anti-resonant microstructured elements, and an outermost coating. An outer contour of a cross-section of the glass capillary tube is circular, the plurality of anti-resonant microstructured elements are distributed on an inner side of the glass capillary tube, and the outermost coating is applied to the glass capillary tube.

The outermost coating has at least one pair of parallel positioning surfaces, such that an outer contour of a cross-section of the hollow-core microstructured fiber is non-circular, and each positioning surface maintains a consistent positional relationship with the plurality of anti-resonant microstructured elements in a longitudinal direction. To achieve mutual alignment, a positioning surface on one side of a fiber may be spliced with a positioning surface on the other side of an adjacent fiber. The positioning surface may present a ">"-shaped contour on a cross-section of the hollow-core microstructured fiber, with one side protruding and the other recessed so as to engage with each other. For ease of processing, the positioning surface is preferably linear in the cross-section of the hollow-core microstructured fiber. Such a configuration not only allows the positioning surfaces to fit and align with each other, but also enables the flatness of the fiber ribbon to be improved through fine adjustment, thereby avoiding height inconsistency among fibers in the fiber ribbon caused by manufacturing tolerances. Preferably, an outer contour of the cross-section of the outermost coating may be racetrack-shaped or octagonal. Further, contours of the outermost coating on two sides of the positioning surface are preferably asymmetric, thereby facilitating orientation identification during assembly of the fiber ribbon and reducing the possibility of upper and lower end-face reversal during alignment of the positioning surfaces. In a typical implementation, the outer contour of the cross-section of the outermost coating is square-bracket-shaped. In this configuration, a straight edge on one side of the positioning surface serves as a base, which facilitates neat side-by-side arrangement of the fibers and constitutes a preferred solution.

For the glass portion of the hollow-core microstructured fiber, orientation matching between fibers relies on the positioning surfaces of the coating. Therefore, the positioning surfaces of the coating should maintain a consistent orientation relative to the glass portion of the hollow-core microstructured fiber. In a preferred implementation, the capillary tube of the hollow-core microstructured fiber, or an inner side of the capillary tube, is provided with a marking, such that the end-face of the hollow-core microstructured fiber becomes asymmetric. Since the anti-resonant microstructured elements inside the fiber are not easily observable, during assembly of the fiber ribbon, it is only necessary to ensure that markings of the plurality of hollow-core microstructured fibers arranged side by side are located in the same orientation relative to an arrangement direction of the fiber ribbon. In this way, the plurality of hollow-core microstructured fibers arranged side by side may be fixed in the ribbon-forming resin in the same orientation. By means of the marking, not only can the orientation of the hollow-core microstructure be marked, but the anti-resonant microstructures can also be distinguished. For hollow-core microstructured fibers produced using the same equipment and process, orientation alignment errors can thus be minimized, thereby improving batch consistency.

The marking has an identifiable contour in an end-face image of the hollow-core microstructured fiber, and may be a refractive-index marking, a wavelength marking, or a structural marking.

The refractive-index marking refers to a portion of the fiber glass having a refractive index different from that of surrounding materials. Because the refractive index differs from that of surrounding materials, the contour of the refractive-index marking can be identified in the end-face image of the hollow-core microstructured fiber under transmitted light or reflected light.

The wavelength marking refers to a portion of the fiber glass having a light transmittance at different wavelengths different from that of surrounding materials. When imaged under illumination of light of different wavelengths or mixed light, the contour of the wavelength marking can be identified in the end-face image of the hollow-core microstructured fiber.

The structural marking refers to a structure having an identifiable shape in the end-face image, including additive structures of the cladding of the hollow-core microstructured fiber and subtractive structures of the cladding of the hollow-core microstructured fiber, thereby increasing asymmetry of the cladding and achieving recognizability. Examples of the additive structures of the cladding of the hollow-core microstructured fiber include pipes, rods, ridges, or other added structural markings. Examples of the subtractive structures of the cladding of the hollow-core microstructured fiber include grooves, drilled holes, or other removed structural markings.

Positioning surfaces of adjacent hollow-core microstructured fibers are aligned and spliced with each other, such that the plurality of hollow-core microstructured fibers arranged side by side are fixed in the ribbon-forming resin in the same orientation.

Conventional communication fibers possess high symmetry, with end-face structures composed of nested circular cores and circular claddings. Therefore, rotation of the fiber end-face does not significantly affect the splicing result, and orientation differences between fibers arranged side by side are generally not considered during fabrication of fiber ribbons. However, hollow-core microstructured fibers differ from conventional circular core-cladding fibers with nearly perfect symmetry. The symmetry of hollow-core microstructured fibers is influenced by both the number and the fabrication quality of the microstructures. Theoretically, hollow-core microstructured fibers exhibit rotational symmetry related to the number of anti-resonant microstructured elements. In practice, however, it is difficult to ensure identical structural parameters among different anti-resonant microstructured elements during fabrication, which further degrades the symmetry. Accordingly, orientation becomes a non-negligible factor affecting splicing of anti-resonant fibers. During splicing of hollow-core microstructured fibers, orientations of the fiber end-faces on both sides usually need to be adjusted so that the hollow-core microstructured elements are aligned as much as possible. For hollow-core microstructured fiber ribbons, poor orientation consistency among the hollow-core microstructured fibers may lead to difficulty in achieving proper orientation matching during ribbon splicing, and may even result in improper orientation matching for all fibers. Therefore, for splicing of hollow-core microstructured fiber ribbons, it is crucial that the fiber ribbon maintains a consistent orientation relative to the fiber arrangement direction. In the present disclosure, orientations of hollow-core microstructured fibers are first determined by the positioning surfaces. Through alignment of the positioning surfaces, orientations of the plurality of fibers in the hollow-core microstructured fiber ribbon are kept consistent, thereby enabling ribbon splicing of the hollow-core microstructured fibers.

In some embodiments, one or more coatings may be disposed between the glass capillary tube and the outermost coating, and the coating or one of the coatings may have a color marking for distinguishing different fibers.

The method for preparing the hollow-core microstructured fiber ribbon provided by the disclosure includes steps of:
arranging the plurality of hollow-core microstructured fibers side by side, such that positioning surfaces of the adjacent hollow-core microstructured fibers are aligned and spliced with each other, where coatings of the hollow-core microstructured fibers have color markings, and the plurality of hollow-core microstructured fibers are arranged side by side according to a preset sequence of the color markings; and
coating and curing a photocurable resin on outer sides of the plurality of hollow-core microstructured fibers arranged side by side to form the ribbon-forming resin, such that positions of the plurality of hollow-core microstructured fibers are fixed.

The embodiments are described as follows.

### Embodiment One

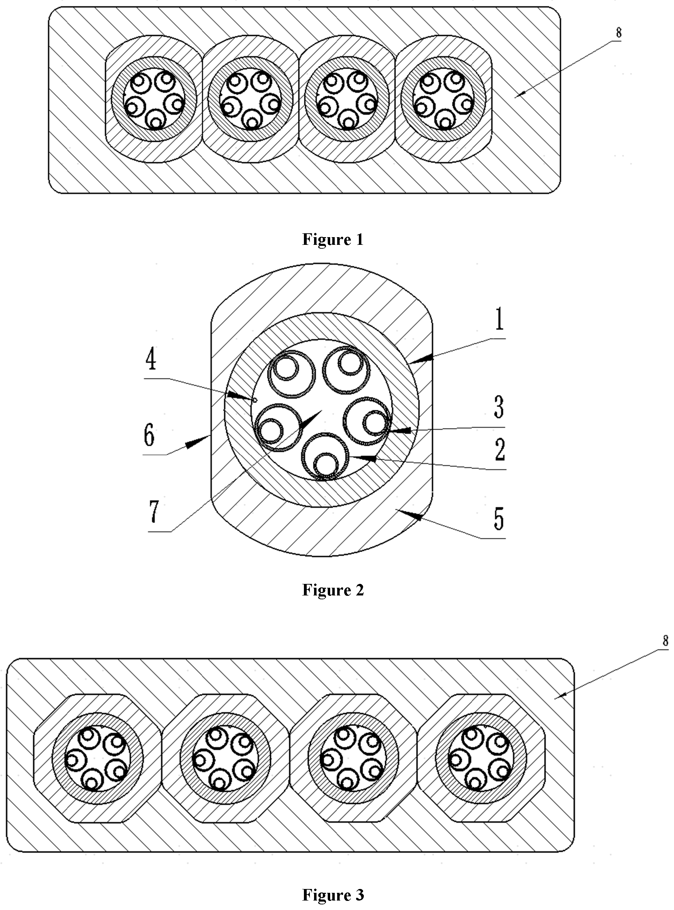

Referring to Fig. 1, a four-core fiber ribbon provided in this embodiment includes four hollow-core microstructured fibers having racetrack-shaped positioning surfaces.

For the hollow-core microstructured fiber, an end-face structure, as shown in Fig. 2, includes a capillary tube as a cladding, a plurality of anti-resonant microstructured elements, and a coating. An outer contour of a cross-section of the cladding is circular. The plurality of anti-resonant microstructured elements are distributed on an inner side of the cladding, and the coating is coated on the cladding.

An inner wall of the cladding is provided with an additive-assisted positioning marking 4. The coating has a racetrack-shaped outer contour and includes a pair of parallel positioning surfaces 6. Five anti-resonant microstructured elements and the asymmetric additive-assisted positioning marking 4 are arranged inside the cladding. Each anti-resonant microstructured element includes a first anti-resonant cladding ring 2 and a second anti-resonant cladding ring 3 nested within the first anti-resonant cladding ring. The cladding 1 is coated with the coating 5 having the positioning surfaces. The positioning surface 6 and the end-face of the hollow-core microstructured fiber are asymmetric. The positioning surface has a defined geometric positional relationship with the additive-assisted positioning marking 4 on the inner wall of the cladding and with the first anti-resonant cladding rings 2. The first anti-resonant cladding rings 2 are circumferentially distributed at uniform intervals and enclose a core region 7.

The hollow-core microstructured fiber provided in this embodiment is fabricated according to the following method.

A drawn bare hollow-core microstructured fiber is coated once or multiple times using a coating die. In the final coating step, the fiber position is fixed relative to the marking. The marking 4 is adjusted to a predetermined position such that the bare fiber passes through the racetrack-shaped coating die in a predetermined orientation. The coating is then cured to form the coating 5 having a racetrack-shaped outer contour, thereby obtaining the hollow-core microstructured fiber of this embodiment.

A hollow-core microstructured fiber ribbon having racetrack-shaped positioning surfaces and using subtractive-assisted positioning markings differs from the above structure using additive-assisted positioning markings only in the type of markings.

The markings of the four hollow-core microstructured fibers arranged side by side are located in the same orientation relative to an arrangement direction of the fiber ribbon, that is, at the same height relative to one of the long edges of the fiber ribbon.

Each fiber has a coating of a different color for identification.

### Embodiment Two

Referring to Fig. 3, a four-core fiber ribbon provided in this embodiment includes four hollow-core microstructured fibers having octagonal positioning surfaces.

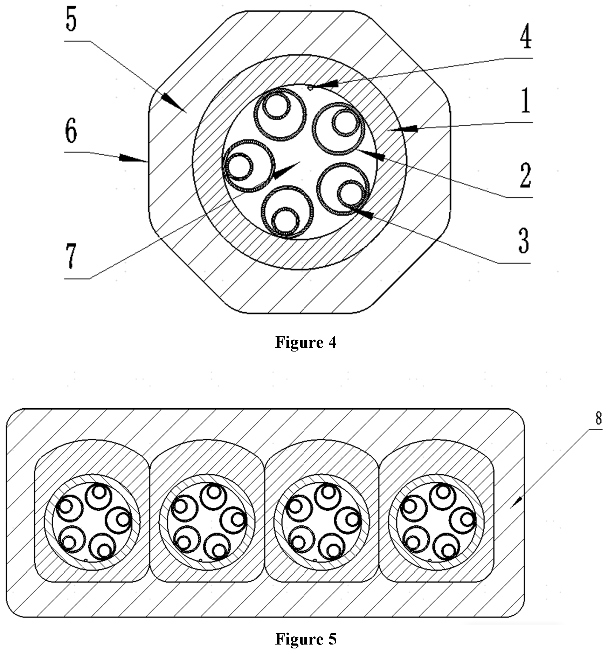

For the hollow-core microstructured fiber, an end-face structure, as shown in Fig. 4, includes a capillary tube as a cladding, a plurality of anti-resonant microstructured elements, and a coating. An outer contour of a cross-section of the cladding is circular. The plurality of anti-resonant microstructured elements are distributed on an inner side of the cladding, and the coating is coated on the cladding.

An inner wall of the capillary is provided with an additive-assisted positioning marking 4. The coating has an octagonal outer contour and includes four pairs of parallel positioning surfaces 6. Five anti-resonant microstructured elements and the asymmetric additive-assisted positioning marking 4 are arranged inside the cladding. Each anti-resonant microstructured element includes a first anti-resonant cladding ring 2 and a second anti-resonant cladding ring 3 nested within the first anti-resonant cladding ring. The cladding 1 is coated with the coating 5 having the positioning surfaces. The positioning surface 6 and the end-face of the hollow-core microstructured fiber are asymmetric. The positioning surface has a defined geometric positional relationship with the additive-assisted positioning marking 4 on the inner wall of the cladding and with the first anti-resonant cladding rings 2. The first anti-resonant cladding rings 2 are circumferentially distributed at uniform intervals and enclose a core region 7.

The hollow-core microstructured fiber provided in this embodiment is fabricated according to the following method.

A drawn bare hollow-core microstructured fiber is coated once or multiple times using a coating die. In the final coating step, the fiber position is fixed relative to the marking. The marking 4 is adjusted to a predetermined position such that the bare fiber passes through the octagonal coating die in a predetermined orientation. The coating is then cured to form the coating 5 having a octagonal-shaped outer contour, thereby obtaining the hollow-core microstructured fiber of this embodiment.

A hollow-core microstructured fiber ribbon having octagonal positioning surfaces and using subtractive-assisted positioning markings differs from the above structure using additive-assisted positioning markings only in the type of markings.

One pair of the four pairs of positioning surfaces is selected for splicing. The markings of the four hollow-core microstructured fibers arranged side by side are located in the same orientation relative to an arrangement direction of the fiber ribbon, that is, at the same height relative to one of the long edges of the fiber ribbon.

Each fiber has a coating of a different color for identification.

### Embodiment Three

Referring to Fig. 5, a four-core fiber ribbon provided in this embodiment includes four hollow-core microstructured fibers having square-bracket-shaped positioning surfaces.

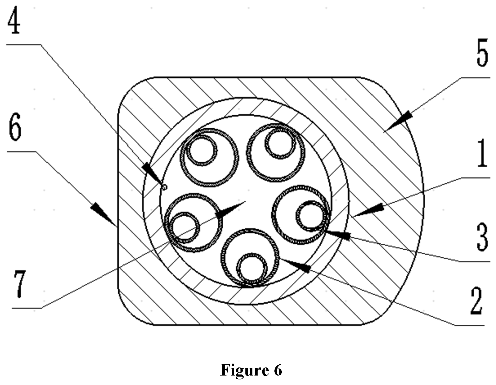

For the hollow-core microstructured fiber, an end-face structure, as shown in Fig. 6, includes a capillary tube as a cladding, a plurality of anti-resonant microstructured elements, and a coating. An outer contour of a cross-section of the cladding is circular. The plurality of anti-resonant microstructured elements are distributed on an inner side of the cladding, and the coating is coated on the cladding.

An inner wall of the cladding is provided with an additive-assisted positioning marking 4. The coating has a square-bracket-shaped outer contour and includes a pair of parallel positioning surfaces 6. Five anti-resonant microstructured elements and the asymmetric additive-assisted positioning marking 4 are arranged inside the cladding. Each anti-resonant microstructured element includes a first anti-resonant cladding ring 2 and a second anti-resonant cladding ring 3 nested within the first anti-resonant cladding ring. The cladding 1 is coated with the coating 5 having the positioning surfaces. The positioning surface 6 and the end-face of the hollow-core microstructured fiber are asymmetric. The positioning surface has a defined geometric positional relationship with the additive-assisted positioning marking 4 on the inner wall of the cladding and with the first anti-resonant cladding rings 2. The first anti-resonant cladding rings 2 are circumferentially distributed at uniform intervals and enclose a core region 7.

The hollow-core microstructured fiber provided in this embodiment is fabricated according to the following method.

A drawn bare hollow-core microstructured fiber is coated once or multiple times using a coating die. In the final coating step, the fiber position is fixed relative to the marking. The marking 4 is adjusted to a predetermined position such that the bare fiber passes through the square-bracket-shaped coating die in a predetermined orientation. The coating is then cured to form the coating 5 having a square-bracket-shaped outer contour, thereby obtaining the hollow-core microstructured fiber of this embodiment.

A hollow-core microstructured fiber ribbon having square-bracket-shaped positioning surfaces and using subtractive-assisted positioning markings differs from the above structure using additive-assisted positioning markings only in the type of markings.

The markings of the four hollow-core microstructured fibers arranged side by side are located in the same orientation relative to an arrangement direction of the fiber ribbon, that is, at the same height relative to one of the long edges of the fiber ribbon. The square-bracket-shaped positioning surfaces are arranged side by side with the flat surfaces facing downward. This configuration facilitates neat side-by-side arrangement of the fibers and reduces the possibility of fiber reversal or mismatching during assembly.

Each fiber has a coating of a different color for identification.

It will be readily understood by a person skilled in the art that foregoing descriptions are merely preferred embodiments of the disclosure, but are not intended to limit the disclosure. Any modifications, equivalent replacements, improvements and the like made within the spirit and principle of the disclosure shall fall within the protection scope of the disclosure.

## Claims

1. A hollow-core microstructured fiber ribbon, **characterized by** comprising a plurality of hollow-core microstructured fibers arranged side by side, the plurality of hollow-core microstructured fibers having identical end-face structures and being coated with a ribbon-forming resin configured to fix positions of the hollow-core microstructured fibers,
wherein each of the hollow-core microstructured fiber comprises a glass capillary tube, a plurality of anti-resonant microstructured elements, and an outermost coating, wherein an outer contour of a cross-section of the glass capillary tube is circular, the plurality of anti-resonant microstructured elements are distributed on an inner side of the glass capillary tube, and the outermost coating is coated on the glass capillary tube;
wherein the outermost coating has at least one pair of parallel positioning surfaces, such that an outer contour of a cross-section of the hollow-core microstructured fiber is non-circular, and each of the positioning surfaces maintains a consistent positional relationship with the plurality of anti-resonant microstructured elements in a longitudinal direction; and
wherein positioning surfaces of adjacent hollow-core microstructured fibers are aligned and spliced with each other, such that the plurality of hollow-core microstructured fibers arranged side by side are fixed in the ribbon-forming resin in a same orientation.

2. The hollow-core microstructured fiber ribbon according to claim 1, **characterized in that** each of the positioning surfaces is linear in a cross-section of the hollow-core microstructured fiber.

3. The hollow-core microstructured fiber ribbon according to claim 1 or 2, **characterized in that** contours of the outermost coating on two sides of each positioning surface are asymmetric.

4. The hollow-core microstructured fiber ribbon according to claim 1 or 2, **characterized in that** an outer contour of a cross-section of the fiber coating for preparing the fiber ribbon is racetrack-shaped, octagonal-shaped, or square-bracket-shaped.

5. The hollow-core microstructured fiber ribbon according to claim 1 or 2, **characterized in that** the capillary tube or an inner side of the capillary tube of the hollow-core microstructured fiber has a marking, such that an end-face of the hollow-core microstructured fiber is asymmetric.

6. The hollow-core microstructured fiber ribbon according to claim 5, **characterized in that** the markings of the plurality of hollow-core microstructured fibers arranged side by side are located in a same orientation relative to an arrangement direction of the fiber ribbon.

7. The hollow-core microstructured fiber ribbon according to claim 1, **characterized in that** one or more coatings are disposed between the glass capillary tube and the outermost coating, and each of the one or more coatings has a color marking.

8. A method for preparing the hollow-core microstructured fiber ribbon according to any one of claims 1 to 7, **characterized by** comprising steps of:
arranging the plurality of hollow-core microstructured fibers side by side, such that positioning surfaces of the adjacent hollow-core microstructured fibers are aligned and spliced with each other; and
coating and curing a photocurable resin on outer sides of the plurality of hollow-core microstructured fibers arranged side by side to form the ribbon-forming resin, such that positions of the plurality of hollow-core microstructured fibers are fixed.

9. The method for preparing the hollow-core microstructured fiber ribbon according to claim 8, **characterized in that** the markings of the plurality of hollow-core microstructured fibers arranged side by side are located in the same orientation relative to the arrangement direction of the fiber ribbon.

10. The method for preparing the hollow-core microstructured fiber ribbon according to claim 8, **characterized in that** coatings of the hollow-core microstructured fibers have color markings, and the plurality of hollow-core microstructured fibers are arranged side by side according to a preset sequence of the color markings.
